(19) **Europäisches Patentamt / European Patent Office / Office européen des brevets**

(11) **EP 1 478 086 B1**

(12) **EUROPEAN PATENT SPECIFICATION**

(45) Date of publication and mention
of the grant of the patent:
**11.03.2009 Bulletin 2009/11**

(51) Int Cl.:
***H02P 6/18*** (2006.01)

(21) Application number: **04010538.9**

(22) Date of filing: **04.05.2004**

(54) **Motor controller**

Motorregler

Commande de moteur

(84) Designated Contracting States:
**ES GR IT**

(30) Priority: **14.05.2003 JP 2003135812**

(43) Date of publication of application:
**17.11.2004 Bulletin 2004/47**

(73) Proprietor: **Panasonic Corporation
Kadoma-shi
Osaka 571-8501 (JP)**

(72) Inventor: **Higashi, Mitsuhide
Kusatsu-shi
Shiga-ken (JP)**

(74) Representative: **Eisenführ, Speiser & Partner
Patentanwälte Rechtsanwälte
Postfach 10 60 78
28060 Bremen (DE)**

(56) References cited:
**JP-A- 1 008 890       JP-A- 7 245 982
JP-A- 7 337 079       JP-A- 10 262 389
JP-A- 2003 111 483    US-A1- 5 057 753**

**Description**

BACKGROUND OF THE INVENTION

Field of the Invention

The present invention relates to a motor controller for frequency-controlling a brushless DC motor.

Description of the Background Art

Conventionally, as a motor controller for controlling the number of rotations of a brushless DC motor, there are a 120° energization method and a sine wave 180° energization method.

The 120° energization method is a method of directly detecting a zero cross signal of an induced voltage and in order to detect it, an inverter phase voltage is compared with a reference voltage. A commutation signal is varied based on this zero cross signal. The zero cross signal is generated 12 times during one rotation of a motor and generated every mechanical angle 30°, that is, every electrical angle 60° (referring to patent document 1: Japanese Patent No. 2642357 B2, for example).

According to the 180° energization method, a differential voltage between a neutral point potential of a motor winding and a neutral point potential of a resistance which is 3-phase Y-connected for a 3-phase inverter output voltage is amplified, it is input to an integration circuit, and a positional detection signal corresponding to an induced voltage is obtained, by comparing an output signal of the integration circuit and a low-pass signal provided by processing the output signal by a filter circuit and cutting a direct current. The positional detection signal is generated 12 times for one rotation of a motor and generated every mechanical angle 30°, that is, every electrical angle 60°. According to this method, phase correction control is required because of the integration circuit (referring to patent document 2 : Japanese Patent Laid-Open Publication No. 7-245982 and patent document 3: Japanese Patent Laid-Open Publication No. 7-337079, for example).

However, the conventional constitution has the following problems.

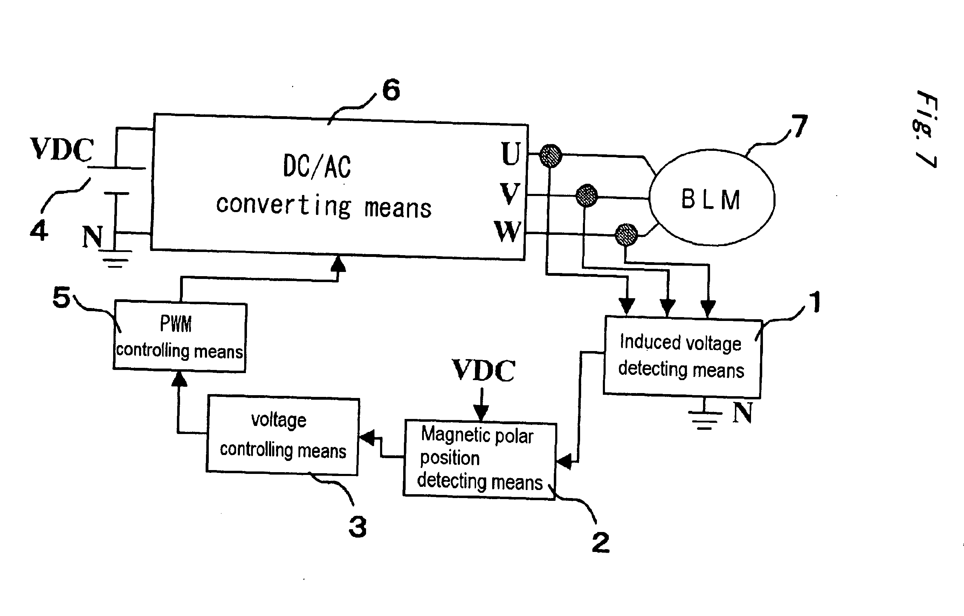

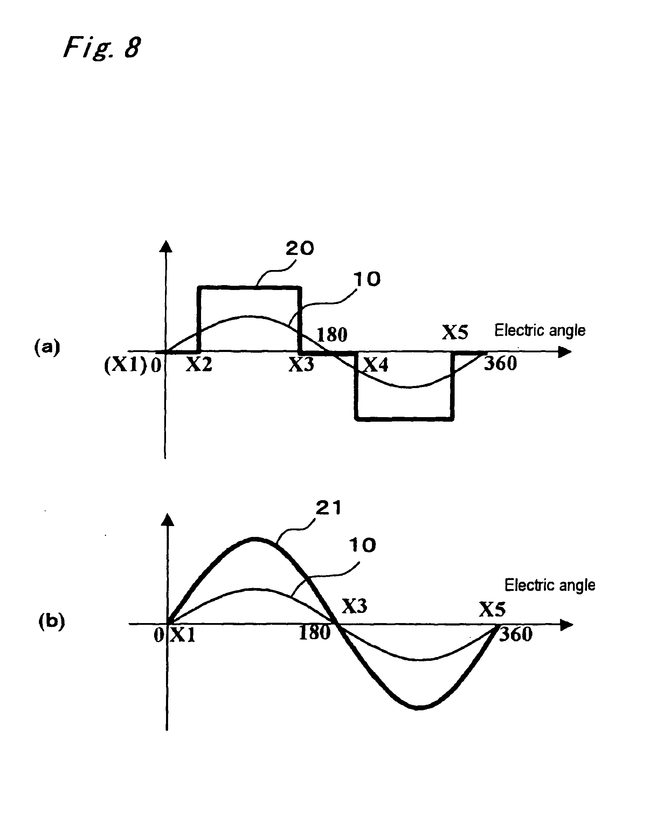

Fig. 7 is a control block diagram showing a conventional motor controller of the 120° energization method. According to this energization method, since a zero cross at an induced voltage part is compared, when motor loading or a power supply voltage is suddenly changed, a zero cross signal of the induced voltage hides behind an inverter output voltage region, so that it cannot be detected in some cases. In this state, a stepping-out phenomenon occurs first and then an inverter system is stopped. In addition, according to this energization method, although the induced voltage per phase can be continuously confirmed for the electrical angle 60°, when an energization angle is set approximately at 150° in order to reduce sound and oscillation at the time of operation of the motor, the induced voltage per phase can be continuously confirmed only for the electrical angle 30°, so that a risk of stepping-out is increased by an influence of an inverter regenerative voltage even at the time of normal operation and an unstable phenomenon such as hunting is likely to occur. In addition, there is a problem that an operation in the vicinity of 180° energization is impossible. Fig. 8 (a) is a relational diagram between a phase current waveform and an induced voltage waveform of a 120° energization method. The induced voltage 10 is set at the position of the phase current 20 at the time of the normal operation. When a maximum number of rotations is increased, it is necessary to advance the phase current 20 but its limit comes soon and high-speed rotation performance is lowered.

Fig. 8(b) is a relational diagram between a phase current waveform and an induced voltage waveform of the 180° energization method. According to the 180° energization method, since a voltage passes through the integration circuit, the zero cross position of the induced voltage cannot be accurately grasped with an absolute value and a phase difference between the zero cross position and the positional detection signal is largely varied depending on the operation state. As a result, complicated control such as phase correction and the like is required so that its phase correction adjustment is difficult or control calculation becomes complicated. In addition, although the neutral point output terminal is required in the motor, since 3-order harmonic component of the induced voltage waveform is used, it cannot be used in the motor using a sine wave magnetizing magnet.

Furthermore, in sensorless sine wave 180° energization driving control by a current feedback method, since a magnetic polar position of a motor is calculated by estimate from a motor current and a motor electrical constant, the calculation error is increased, a limit point of advancing control of the motor current comes soon and the maximum number of rotations is far inferior to control with a positional sensor.

SUMMARY OF THE INVENTION

The present invention was made to solve the above problems, and it is an object of the present invention to provide a motor controller in which high-speed performance at the same level as the sine wave 180° energization with a positional sensor can be implemented by a new method of induced voltage feedback control not using a mechanical electromagnetic pick-up sensor, and stepping-out limit torque is further improved in any operation loading region with low cost and high reliability.

In order to solve the above problems, a motor controller according to the present invention comprises AC/DC converting means having a plurality of switching elements, for converting a DC voltage to an AC voltage based on a PWM signal to output it to a 3-phase brushless DC motor by opening and closing the switching elements, induced voltage detecting means for detecting an induced voltage of the brushless DC motor, magnetic polar position detecting means for detecting a magnetic polar position of the brushless DC motor from the induced voltage, voltage controlling means for outputting a voltage waveform based on the magnetic polar position output from the magnetic polar position detecting means, and PWM controlling means for converting the voltage waveform to the PWM signal, and the motor controller further comprises regenerative voltage detecting means for detecting a regenerative voltage included in the induced voltage, and said magnetic polar position detecting means determines the magnetic polar position based on the detected regenerative voltage and induced voltage.

In addition, according to the motor controller of the present invention, the regenerative voltage detecting means samples the induced voltage one time or a plurality of times.

Still further, according to the motor controller of the present invention, the regenerative voltage detecting means has a predetermined reference voltage and determines the regenerative voltage by comparing the induced voltage with the reference voltage.

Still further, according to the motor controller of the present invention, the reference voltage is calculated in such a manner that the DC voltage value x regenerative voltage factor.

In addition, according to the motor controller of the present invention, the regenerative voltage factor is a real number which satisfies that $0 \leq$ regenerative voltage factor $\leq 1$.

Still further, according to the motor controller of the present invention, the regenerative voltage detecting means determines the voltage as the regenerative voltage when the induced voltage $\geq$ the reference voltage in a case where a time derivative value of the induced voltage is positive and determines the voltage as the regenerative voltage when the induced voltage $\leq$ the reference voltage in a case where the time derivative value of the induced voltage is negative.

Furthermore, according to the motor controller of the present invention, the magnetic polar position detecting means does not detect the induced voltage in a time region in which an output of the regenerative voltage detecting means determines the voltage as the regenerative voltage, and detects the induced voltage and recognizes the magnetic polar position when a predetermined condition is satisfied in a time region in which an output of the regenerative voltage detecting means determines the voltage as the non-regenerative voltage.

As described above, there can be provided the motor controller in which high-speed performance at the same level as the since wave 180° energization with a positional sensor can be implemented without using a mechanical pick-up sensor, and stepping-out limit torque is improved with low cost and high reliability.

BRIEF DESCRIPTION OF THE DRAWINGS

Fig. 1 is a control block diagram showing a motor controller according to an embodiment of the present invention;
Fig. 2(a) is a constitutional diagram of AC/DC converting means, and Fig. 2(b) is a relational diagram showing a field induced voltage waveform of a 3-phase brushless DC motor;
Fig. 3 is a view (1) for explaining operations of regenerative voltage detecting means of the present invention;
Fig. 4 is a view (2) for explaining operations of regenerative voltage detecting means of the present invention;
Fig. 5 is a view (3) for explaining operations of regenerative voltage detecting means of the present invention;
Fig. 6 is an equivalent circuit diagram of a 3-phase brushless DC motor of the present invention;
Fig. 7 is a control block diagram showing a conventional motor controller; and
Fig. 8 is a relational diagram between conventional phase current waveform and induced voltage waveform.

DESCRIPTION OF THE PREFERRED EMBODIMENTS

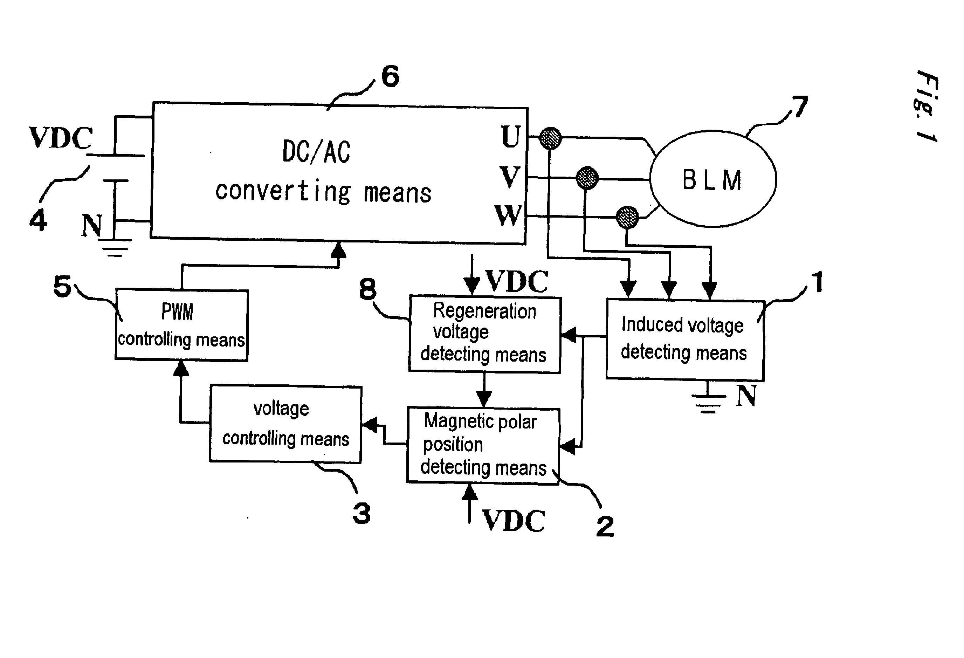

Hereinafter, a description is made of a motor controller according to an embodiment of the present invention. Fig. 1 is a control block diagram showing a motor controller of this embodiment. The motor controller according to this embodiment is provided for controlling the number of rotations of a 3-phase brushless DC motor 7. Referring to Fig. 1, the motor controller comprises AC/DC converting means 6 for converting a DC voltage 4 to an AC voltage to output it to the three-phase brushless DC motor (referred to as simply a BLM hereinafter) 7, induced voltage detecting means 1 for detecting an induced voltage of the BLM 7, magnetic polar position detecting means 2 for detecting a magnetic polar position of the brushless DC motor from the induced voltage, voltage controlling means 3 for outputting a voltage waveform based on the magnetic polar position output from the magnetic polar position detecting means 2, PWM controlling means 5 for converting the voltage waveform to a PWM signal, regenerative voltage detecting means 8 for detecting a regenerative voltage included in the induced voltage, and magnetic polar position detecting means 2 for determining a magnetic polar position based on the detected regenerative voltage and induced voltage.

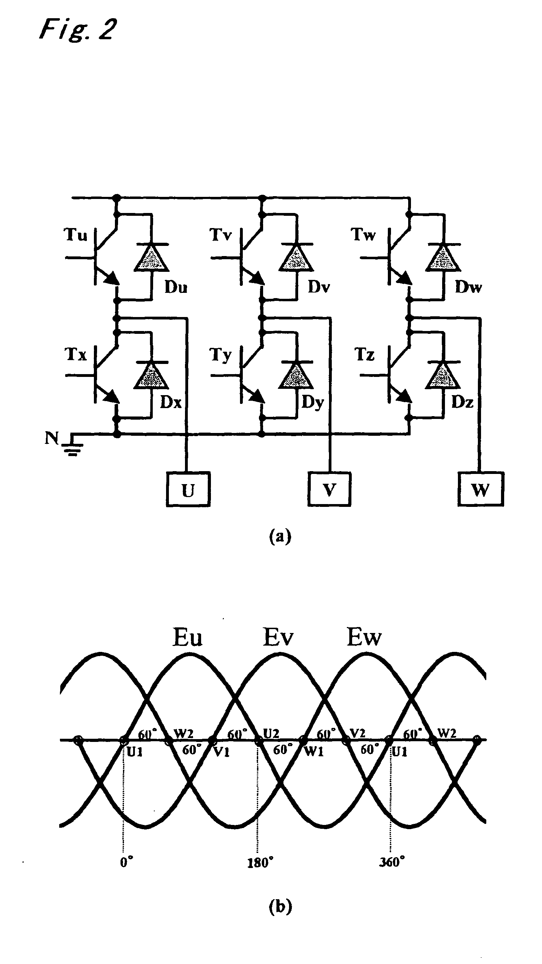

The PWM controlling means 5 outputs the PWM signal for controlling an applied voltage, a frequency and a phase for controlling the number of rotations of the BLM 7. The AC/DC converting means 6 consists of six switching elements (Fig. 2(a)) which are opened and closed at high speed.

First, a description is sequentially made of operations of the induced voltage detecting means 1, the magnetic polar position detecting means 2, the voltage controlling means 3 and the PWM controlling means 5. This part is the same as operations in a conventional controller shown in a control block diagram in Fig. 7.

Referring to Fig. 1, the induced voltage detecting means 1 drops the induced voltage of the BLM 7 and the magnetic polar position detecting means 2 detects an induced voltage zero cross signal and outputs the induced voltage zero cross signal as the magnetic polar position to the voltage controlling means 3. The voltage controlling means 3 calculates the voltage waveform for driving the BLM 7 based on the magnetic polar position and outputs it to the PWM controlling means 5. The PWM controlling means 5 outputs a PWM signal to the AC/DC converting means 6 based on the voltage waveform. According to the motor controller constituted as described above, the number of rotations of the BLM 7 is controlled by varying the frequency and the phase (hereinafter, referred to as the "inverter frequency") of the AC voltage output from the AC/DC converting means 6.

In a case of 120° energization method, the PWM controlling means 5 outputs six kinds of PWM signals for opening and closing the switching elements of the AC/DC controlling means 6 and an inverter frequency output from the AC/DC converting means 6 is controlled by opening and closing the switching elements by the six kinds of PWM signals.

A description is made of the six kinds of PWM signals. The six kinds of PWM signals are pulse signals for driving the switching elements of the AC/DC converting means 6. The PWM signals have six fundamental patterns PTN1 to PTN6 in one cycle of inverter electrical angles and the inverse number of one cycle of PWM signals becomes the inverter frequency. Actually, according to a method of varying the number of rotations of the BLM 7, the number of rotations of the BLM 7 is controlled while the PWM controlling means 5 varies the inverter frequency of the AC/DC converting means 6.

As shown in Fig. 2(a), the AC/DC converting means 6 has six switching elements so as to comprise one switching element at an upper arm and one switching element at a lower arm for each of the U phase, V phase and W phase.

According to the PTN 1, the upper arm switching element Tu in U phase and the lower arm switching element Ty in V phase are energized.

According to the PTN 2, the upper arm switching element Tu in U phase and the lower arm switching element Tz in W phase are energized.

According to the PTN 3, the upper arm switching element Tv in V phase and the lower arm switching element Tz in W phase are energized.

According to the PTN 4, the upper arm switching element Tv in V phase and the lower arm switching element Tx in U phase are energized.

According to the PTN 5, the upper arm switching element Tw in W phase and the lower arm switching element Tx in U phase are energized.

According to the PTN 6, the upper arm switching element Tw in W phase and the lower arm switching element Ty in V phase are energized.

A switching operations of the PWM signals are performed based on the voltage waveform output from the voltage controlling means 3.

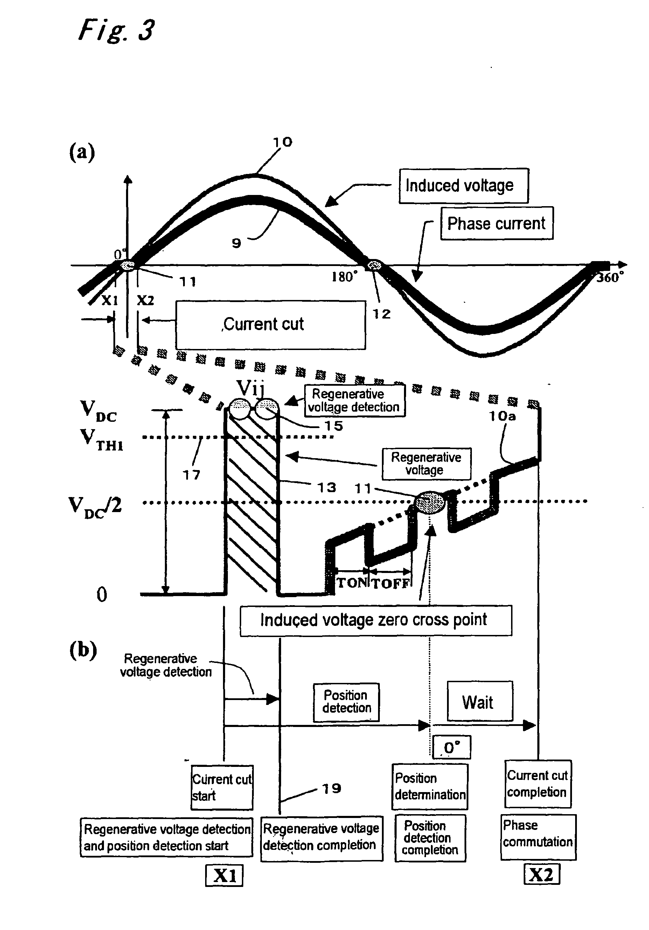

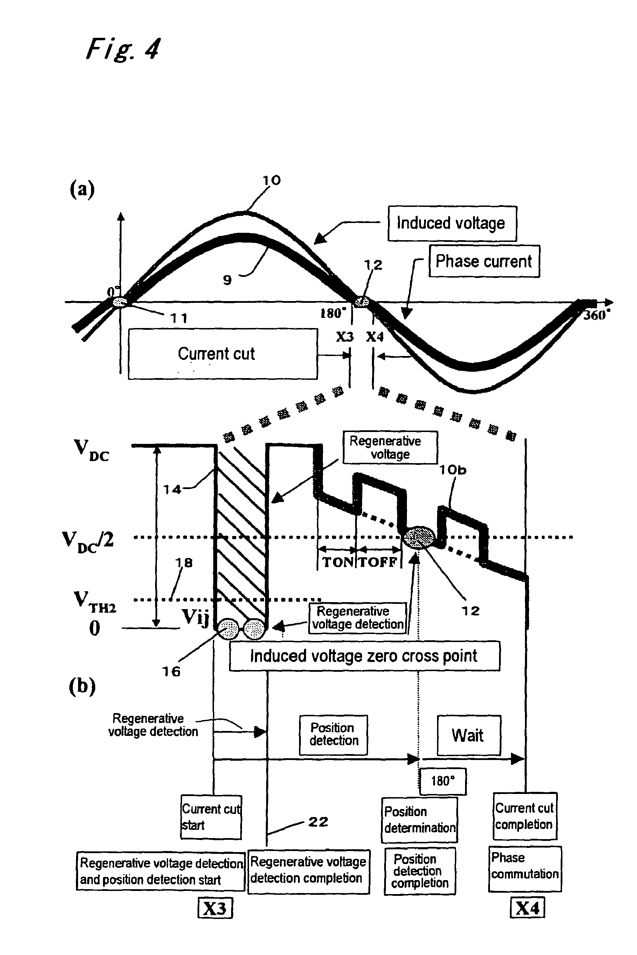

A detailed operation of the magnetic polar position detecting means 2 is described with reference to Fig. 2(b), Figs. 3 and 4. The induced voltage zero cross signal of the BLM 7 is generated six times in one cycle of the electrical angles. Fig. 3(a) shows the induced voltage zero cross signal per phase. Fig. 3(a) is a graph showing a relation between a phase current waveform and a phase induced voltage waveform, in which an induced voltage 10, a phase current 9, a positive zero cross signal 11 and a reverse zero cross signal 12 are shown. The positive zero cross signal 11 and the reverse zero cross signals 12 are generated at an electrical angle 0° and 180°, respectively. When it is assumed that the negative side of the DC voltage 4 is GND potential N, the induced voltage which can be actually measured by the magnetic polar position detecting means 2 is shown by an induced voltage 10a in Fig 3(b) and an induced voltage 10b in Fig. 4(b). Although this means that a line voltage of the BLM 7 is measured, when the induced voltage in the vicinity of the zero cross signal is considered, it becomes a waveform in which a PWM voltage component is superposed on the voltage waveform of the induced voltage 10.

Basically, the positive zero cross signal 11 (the reverse zero cross signal 12) can be detected at an intersection of a half of the DC voltage VDC (= VDC/2) and the induced voltage 10a (10b), and during a period in which one of the upper arm elements and one of the lower arm elements are in the conduction-fired state (TON part in Figs. 3 and 4).

The magnetic polar position detecting means 2 detects the positive zero cross signal 11 and the reverse zero cross signal 12 shown in the drawings and outputs it as the magnetic polar position to the voltage controlling means 3. The voltage controlling means 3 calculates the voltage waveform which is almost similar to that of the phase current 9 based on the zero cross signal, and the PWM controlling means 5 outputs a base PTN of the PWM signal corresponding to each electrical angle based on the voltage waveform. Electrical angles X1 to X2 in Fig. 3 and electrical angles X3 to X 4 in Fig. 4 are current cut section. In addition, the voltage controlling means 3 can output the voltage waveform of 120° to 180° energization waveform. However, when the induced voltage is measured, its energization angle has to be less than 180°.

In the case of energization angle > 120°, a PWM signal for 3-phase sine wave driving is added to the above six kinds of PWM signals described in the 120° energization method. Basically, the PWM signals for 120 ° energization method are used in a section (≡ current cut section) in which any one of three phases of currents is turned off. The PWM signal for 3-phase sine wave driving is used in a section in which the phase current flows in all three phases. Since this PWM signal has been already known in 3-phase sine wave PWM control, a detailed description of that is omitted here.

In addition, although the voltage waveform output from the voltage controlling means 3 is almost similar to the phase current 9, its phase is a little advanced from the phase current 9. According to this embodiment, a description is made while it is assumed that a phase difference between them is zero for simplification. That is, it is defined that the voltage waveform ≡ the phase current 9.

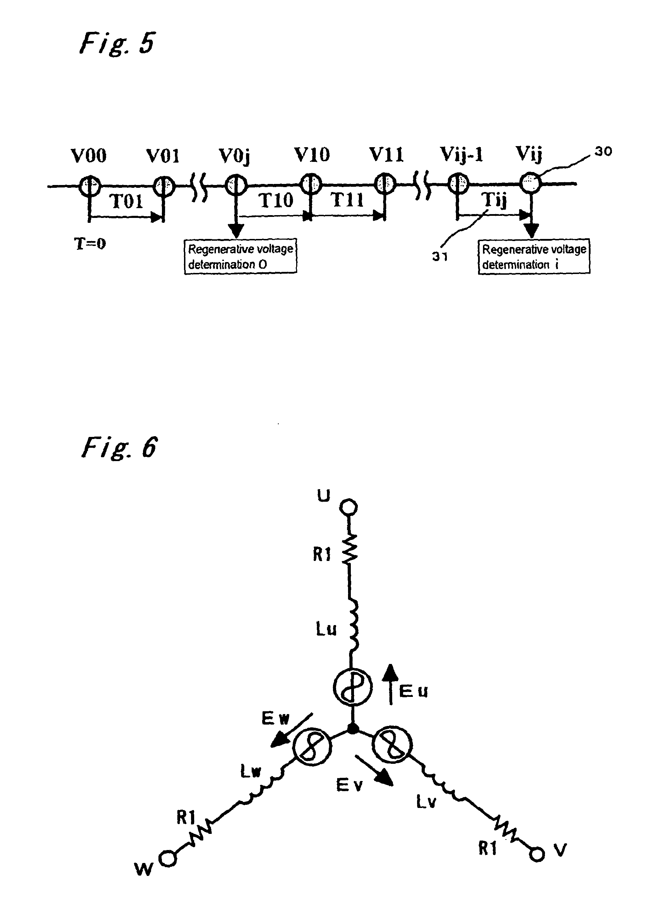

Fig. 6 is an equivalent circuit diagram of the BLM 7. Reference character R1 designates a winding primary resistance, reference characters Lu, Lv and Lw each designate inductances of the phases, and reference characters Eu, Ev and Ew each designate field induced voltages of the phases. Here, the field induced voltage means the induced voltage generated only in a magnet (field) when the BLM 7 is rotated in a non-energization state. Fig. 2(b) is a relational diagram showing a field induced voltage waveform of the 3-phase brushless DC motor. In Fig. 2(b), reference character U1 designates a positive zero cross position of Eu and reference character U2 designates a reverse zero cross position of Eu. Similarly, other phases are shown and ideally, a distance between the zero cross positions is 60° and there are six zero cross positions in one cycle of electrical angles. These zero cross positions are named as genuine magnetic polar positions of the BLM 7.

The genuine magnetic polar positions of the BLM 7 cannot be directly determined from the zero cross signal of the induced voltage 10 because of an influence of an armature reaction, and a phase difference is generated between them. In addition, since this phase difference depends on an operation loading, it is difficult to determine the genuine magnetic polar positions from the induced voltage zero cross signal. However, even if the genuine magnetic polar positions cannot be determined, the number of rotations of the BLM 7 can be sufficiently controlled by the induced voltage zero cross signal only, and there is a case where it is more preferable to control it by the induced voltage. According to this embodiment, a description is made while it is assumed that the phase difference between them is zero. That is, the genuine magnetic polar position ≡ the induced voltage zero cross position.

More specifically, when the induced voltage 10 in Fig 3(a) corresponds to the U phase, the following formulas are provided.
Zero cross U1 ≡ positive zero cross signal 11
Zero cross U2 ≡ reverse zero cross signal 12

In addition, Eu ≠ induced voltage 10.

The above formula is generated because voltage waveform amplitudes of them are different because of the influence of armature reaction. Next, a detailed description is made of the regenerative voltage detecting means 8 with reference to Figs. 3, 4 and 5. In general, as a condition in which the regenerative voltage is generated, it is continuously generated during a predetermined time from the moment when the phase current of the BLM 7 is cut, and then the original induced voltage is generated. Since both regenerative voltage and induced voltage are included in the output of the induced voltage detecting means 1, it is necessary to discriminate between them. When this discrimination is made wrongly, the regenerative voltage part is falsely detected as the zero cross signal of the induced voltage, so that an abnormal phenomenon such as hunting or stepping-out occurs.

Fig. 3(b) and Fig. 4(b) show relational diagram between the regenerative voltage and the induced voltage. Fig. 3 shows a case where a time derivative value is positive as the induced voltage 10 and Fig. 4 shows a case where the time derivative value is negative as the induced voltage 10. Referring to the drawings, a regenerative voltage 13 and a regenerative voltage 14 are generated from the moment when the phase current 9 is cut and continuously generated until a regenerative voltage completion point 19 and a regenerative voltage completion point 22. As a necessary condition to determine the positive zero cross signal 11, there is a following formula.

$$\text{Induced voltage } 10a \geq \; VDC / 2$$

In addition, as a necessary condition to determine the reverse zero cross signal 12, there is a following formula.

$$\text{Induced voltage } 10b \leq VDC / 2$$

However, since the voltage value of the regenerative voltage 13 is already DVC before the positive zero cross signal 11 is detected and the above relation has been satisfied, false detection is made. In order to prevent the false detection, the position detected result before the regenerative voltage completion point 19 is ignored in the positional detection in the drawings and the positional detection is started after the regenerative voltage completion point 19, so that the regenerative voltage 13 is not falsely detected as the positive zero cross signal 11.

Similarly, in the case of the reverse zero cross signal 12 also, since the voltage value of the regenerative voltage 14 is 0v and the above formula has been already satisfied, false detection is made. In order to prevent this false detection, the positional detection is made after the regenerative voltage completion point 22 in the positional detection section in the drawing. Thus, the regenerative voltage detecting means 8 outputs the regenerative voltage completion points 19 and 22 as the regenerative voltage completion signals to the magnetic polar position detecting means 2, and the magnetic polar position detecting means 2 ignores the positional detection of the regenerative voltages 13 and 14 until it receives the signal. Then, since it starts the positional detection when it receives the signal, the original positive zero cross signal 11 and the reverse zero cross signal 12 can be determined.

The regenerative voltage detecting means 8 has a VTH 1 regenerative determination reference voltage 17 and a VTH 2 regenerative determination reference voltage 18 inside thereof and makes determination by comparing the values with the regenerative voltages 13 and 14. That is, the following formulas are provided.

$$\text{VTH 1 regenerative determination reference voltage 17} = \text{regenerative voltage factor} * VDC$$

$$\text{VTH 2 regenerative determination reference voltage 18} = \text{regenerative voltage factor} * VDC$$

The factor is a real number which satisfies that $0 \leq \text{regenerative voltage factor} \leq 1$.

The above regenerative voltage factor may be appropriately set. In addition, the regenerative voltage detecting means 8 samples the voltage of the regenerative voltages 13 and 14. That is, they are regenerative detection points 15 and 16. The regenerative voltage detecting means 8 samples the voltage from electrical angles X1 and X3 which are starting points of the current cut to find a voltage Vij at the regenerative detection points 15 and 16. This voltage Vij is described with reference to Fig. 5.

Fig. 5 is a view for explaining a voltage sampling operation of the regenerative voltage detecting means 8. In Fig. 5, a place where T = 0 corresponds to the electrical angles X1 and X3 which are current cut starting points. The regenerative voltage detecting means 8 start to sample the induced voltage (which is still the regenerative voltage at this point) of the induced voltage detecting means 1 from the place where T = 0, and outputs the regenerative completion signal at the regenerative voltage completion points 19 and 22 where the regenerative voltage is completed, to the magnetic polar position detecting means 2. A Vij regenerative detection point 30 where the regenerative voltage is taken in at intervals of time Tij31 from the place where T = 0 is obtained and the regenerative voltage is determined every V0j, V1j, V2j, ... Vij. Here, i and j are arbitral natural numbers. When the determination of the regenerative voltage is made, Vi, that is,

$$Vi = \sum (Vip) / (j + 1) \, ; \, p = 0 \rightarrow j$$

is found and the Vi is compared with VTH1 or VTH2 to determine the regenerative voltage. In other words, when $Vi \geq$ VTH1 in the case of Fig. 3 and $Vi \leq$ VTH 2 in the case of Fig. 4, Vi is regarded as the regenerative voltage. While the condition of the above formula is satisfied, the magnetic polar position detecting means 2 ignores all of the positional detection result. Then, when the condition of the above formula is not satisfied, the regenerative voltage detecting means 8 outputs the regenerative completion signal to the magnetic polar position detecting means 2 and the magnetic polar position detecting means 2 receives the signal and starts to determine the positional detection. The magnetic polar position detecting means 2 founds the positive zero cross signal 11 and the reverse zero cross signal 12 on the basis of the conventional criteria as described above when receives the regenerative completion signal. When the positional determination is completed, the current cut is completed at the electrical angle X2 after a wait time passed in Figs. 3 and 4 and phase commutation (switching of the base PTN) is performed.

Although this embodiment was described in the case of the 3-phase brushless DC motor, an idea when a single-phase brushless DC motor applied is the same as the above and modification, addition and elimination of this embodiment can be appropriately carried out within a scope which does not deviate from purpose, conception and claims of the present invention.

As described above, the motor controller according to the present invention comprises the AC/DC converting means having the plurality of switching elements, for converting the DC voltage to the AC voltage based on the PWM signal to output it to the 3-phase brushless DC motor by opening and closing the switching elements, the induced voltage detecting means for detecting the induced voltage of the brushless DC motor, the magnetic polar position detecting means for detecting the magnetic polar position of the brushless DC motor from the induced voltage, the voltage controlling means for outputting the voltage waveform based on the magnetic polar position output from the magnetic polar position detecting means, and the PWM controlling means for converting the voltage waveform to the PWM signal, and the motor controller further comprises the regenerative voltage detecting means for detecting the regenerative voltage included in the induced voltage, and said magnetic polar position detecting means determines the magnetic polar position based on the detected regenerative voltage and induced voltage. Thus, there can be provided the motor controller in which stepping-out phenomenon caused by the regenerative voltage is avoided and an inverter system corresponding to a wide range of operation loading can be provided.

In addition, according to the motor controller of the present invention, the regenerative voltage detecting means samples the induced voltage one time or a plurality of times. Thus, there can be provided the motor controller impervious to disturbance, which does not malfunction due to passive noise, so that operation reliability is improved.

Still further, according to the motor controller of the present invention, the regenerative voltage detecting means has the predetermined reference voltage and determines the regenerative voltage by comparing the induced voltage with the reference voltage. Thus, there can be provided the motor controller in which the regenerative voltage can be precisely determined and stability is further improved.

Still further, according to the motor controller of the present invention, the reference voltage is calculated in such a manner that the DC voltage value x regenerative voltage factor. Thus, there can be provided the motor controller in which regenerative voltage can be accurately determined even when the DC voltage variation is large, and very high reliability for the voltage variation can be implemented.

In addition, according to the motor controller of the present invention, the regenerative voltage factor is a real number which satisfies that $0 \leq$ regenerative voltage factor $\leq 1$. Thus, there can be provided the motor controller in which there is no unstable behavior, and there is no abnormal sound, abnormal oscillation nor abnormal heating since the regenerative voltage can be surely determined.

Still further, according to the motor controller of the present invention, the regenerative voltage detecting means determines the voltage as the regenerative voltage when the induced voltage > the reference voltage in the case where the time derivative value of the induced voltage is positive and determines the voltage as the regenerative voltage when the induced voltage < the reference voltage in the case where the time derivative value of the induced voltage is negative. Thus, there can be provided the motor controller which is highly stable for a load variation, a voltage variation and a temperature variation since the regenerative voltage can be appropriately and precisely extracted.

Furthermore, according to the motor controller of the present invention, the magnetic polar position detecting means does not detect the induced voltage in the time region in which the output of the regenerative voltage detecting means determines the voltage as the regenerative voltage, and detects the induced voltage and recognizes the magnetic polar position when the predetermined condition is satisfied in the time region in which the output of the regenerative voltage detecting means determines the voltage as the non-regenerative voltage. Thus, there can be provided the motor controller superior in stability, response, reliability and adaptability since the magnetic polar position can be surely detected.

## Claims

1. A motor controller comprising DC/AC converting means (6) having a plurality of switching elements, for converting a DC voltage to an AC voltage based on a PWM signal to output it to a 3-phase brushless DC motor (BLM) by opening and closing the switching elements, induced voltage detecting means (1) for detecting an induced voltage of the brushless DC motor, magnetic polar position detecting means (2) for detecting a magnetic polar position of the brushless DC motor from the induced voltage, voltage controlling means (3) for outputting a voltage waveform based on the magnetic polar position output from the magnetic polar position detecting means (2), and PWM controlling means (5) for converting the voltage waveform to the PWM signal, **characterized by** regenerative voltage detecting means (8) for detecting a regenerative voltage included in the induced voltage, and said magnetic polar position detecting means (2) determines the magnetic polar position based on the detected regenerative voltage and induced voltage.

2.  The motor controller according claim 1, wherein the regenerative voltage detecting means (8) samples the induced voltage one time or a plurality of times.

3.  The motor controller according to claim 1 or 2, wherein the regenerative voltage detecting means (8) has a predetermined reference voltage and determines the regenerative voltage by comparing the induced voltage with the reference voltage.

4.  The motor controller according to claim 3, wherein the reference voltage is calculated in such a manner that the DC voltage value x regenerative voltage factor.

5.  The motor controller according to claim 4, wherein the regenerative voltage factor is a real number which satisfies that 0 ≤ regenerative voltage factor ≤ 1.

6.  The motor controller according to any one of claims 3 to 5, wherein the regenerative voltage detecting means (8) determines the voltage as the regenerative voltage when the induced voltage ≥ the reference voltage in a case where a time derivative value of the induced voltage is positive and determines the voltage as the regenerative voltage when the induced voltage ≤ the reference voltage in a case where the time derivative value of the induced voltage is negative.

7.  The motor controller according to any one of claims 1 to 6, wherein the magnetic polar position detecting means (2) does not detect the induced voltage in a time region in which an output of the regenerative voltage detecting means (8) determines the voltage as the regenerative voltage, and detects the induced voltage and recognizes the magnetic polar position when a predetermined condition is satisfied in a time region in which the output of the regenerative voltage detecting means determines the voltage as the non-regenerative voltage.

**Patentansprüche**

1.  Motorregler, Folgendes umfassend: einen DC/AC Wandler (6), der eine Mehrzahl von Schaltern aufweist, um basierend auf einem PWM-Signal eine Gleichspannung in eine Wechselspannung umzuwandeln, um diese durch das Öffnen und Schließen der Schalter zu einem dreiphasigen bürstenlosen Gleichstrommotor (BLM) auszugeben; ein Erfassungsmittel für induzierte Spannung (1) zum Erfassen einer induzierten Spannung des bürstenlosen Gleichstrommotors; ein Erfassungsmittel der magnetischen Polarposition (2) zum Erfassen einer magnetischen Polarposition des bürstenlosen Gleichstrommotors von der indizierten Spannung; ein Spannungsreglermittel (3) zum Ausgeben einer Spannungswellenform, basierend auf der Ausgabe der magnetischen Polarposition von dem Erfassungsmittel der magnetischen Polarposition (2); sowie einen PWM-Regler (5) zum Umwandeln der Spannungswellenform in das PWM - Signal, **gekennzeichnet durch** ein Erfassungsmittel für positiv rückgekoppelte Spannung (8) zum Erfassen einer positiv rückgekoppelten Spannung, die in der induzierten Spannung enthalten ist, und **dadurch** dass das Erfassungsmittel der magnetischen Polarposition (2) die magnetische Polarposition basierend auf der erfassten positiv rückgekoppelten Spannung und der induzierten Spannung bestimmt.

2.  Motorregler nach Anspruch 1, wobei das Erfassungsmittel für positiv rückgekoppelte Spannung (8) die induzierte Spannung einmal oder eine Mehrzahl von Malen abfragt.

3.  Motorregler nach Anspruch 1 oder 2, wobei das Erfassungsmittel für positiv rückgekoppelte Spannung (8) eine vorbestimmte Bezugsspannung aufweist und durch das Vergleichen der induzierten Spannung mit der Bezugsspannung die positiv rückgekoppelte Spannung bestimmt.

4.  Motorregler nach Anspruch 3, wobei die Bezugsspannung in einer solchen Weise berechnet wird, dass diese den DC-Spannungswert x den positiv rückgekoppelten Spannungs-Faktor darstellt.

**5.** Motorregler nach Anspruch 4, wobei der positiv rückgekoppelte Spannungs-Faktor eine reelle Zahl darstellt, die Folgendes erfüllt: 0 ≤ positiv rückgekoppelter Spannungs-Faktor ≤1.

**6.** Motorregler nach einem der Ansprüche 3 bis 5, wobei das Erfassungsmittel für positiv rückgekoppelte Spannung (8) die Spannung als die positiv rückgekoppelte Spannung bestimmt, wenn die induzierte Spannung ≥ die Bezugsspannung, in einem Fall, in dem ein Vorhaltezeit-Wert der induzierten Spannung positiv ist, und die Spannung als die positiv rückgekoppelte Spannung bestimmt, wenn die induzierte Spannung ≤die Bezugsspannung, in einem Fall, in dem ein Vorhaltezeit-Wert der induzierten Spannung negativ ist

**7.** Motorregler nach einem der Ansprüche 1 bis 6, wobei das Erfassungsmittel der magnetischen Polarposition (2) in einem solchen Zeitabschnitt die induzierte Spannung nicht erfasst, in dem eine Ausgangsgröße des Erfassungsmittels für positiv rückgekoppelte Spannung (8) die Spannung als die positiv rückgekoppelte Spannung bestimmt, und die induzierte Spannung erfasst und die magnetische Polarposition erkennt, wenn ein vorbestimmter Zustand erfüllt ist, in einem Zeitabschnitt, in dem die Ausgangsgröße des Erfassungsmittels für positiv rückgekoppelte Spannung (8) die Spannung als die nicht-positiv rückgekoppelte Spannung bestimmt.

**Revendications**

**1.** Unité de commande de moteur comprenant un moyen (6) de conversion courant continu/courant alternatif ayant une pluralité d'éléments de commutation, pour convertir une tension à coutant continu en une tension à courant alternatif sur la base d'un signal à PWM pour le délivrer en sortie à un moteur à courant continu sans balai triphasé (BLM) en ouvrant et en fermant les éléments de commutation, un moyen (1) de détection de tension électrique induite pour détecter une tension électrique induite du moteur à courant continu sans balai, un moyen (2) de détection de position polaire magnétique pour détecter une position polaire magnétique du moteur à courant continu sans balai d'après la tension électrique induite, un moyen (3) de commande de tension électrique pour délivrer en sortie une forme d'onde de tension électrique sur la base de la position polaire magnétique délivrée en sortie du moyen (2) de détection de position polaire magnétique, et un moyen (5) de commande de PWM pour convertir la forme d'onde de tension électrique en un signal à PWM, **caractérisée par** un moyen (8) de détection de tension électrique régénérative pour détecter une tension électrique régénérative comprise dans la tension électrique induite, et ledit moyen (2) de détection de position polaire magnétique détermine la position polaire magnétique sur la base de la tension électrique régénérative et la tension électrique induite détectées.

**2.** Unité de commande de moteur selon la revendication 1, dans laquelle le moyen (8) de détection de tension électrique régénérative effectue un échantillonnage de la tension électrique induite une fois ou plusieurs fois.

**3.** Unité de commande de moteur selon la revendication 1 ou 2, dans laquelle le moyen (8) de détection de tension électrique régénérative dispose d'une tension électrique de référence prédéterminée et détermine la tension électrique régénérative en comparant la tension électrique induite à la tension électrique de référence.

**4.** Unité de commande de moteur selon la revendication 3, dans laquelle la tension électrique de référence est calculée sur la base de la valeur de la tension à courant continu x le facteur de tension électrique régénérative.

**5.** Unité de commande de moteur selon la revendication 4, dans laquelle le facteur de tension électrique régénérative est un nombre réel qui satisfait 0 ≤ facteur de tension électrique régénérative ≤ 1.

**6.** Unité de commande de moteur selon l'une quelconque des revendications 3 à 5, dans laquelle le moyen (8) de détection de tension électrique régénérative détermine la tension électrique comme étant la tension électrique régénérative lorsque la tension électrique induite ≥ la tension électrique de référence dans un cas où une valeur dérivée par rapport au temps de la tension électrique induite est positive et détermine la tension électrique comme étant la tension électrique régénérative lorsque la tension électrique induite ≤ la tension électrique de référence dans un cas où la valeur dérivée par rapport au temps de la tension électrique induite est négative.

**7.** Unité de commande de moteur selon l'une quelconque des revendications 1 à 6, dans laquelle le moyen (2) de détection de position polaire magnétique ne détecte pas la tension électrique induite dans une région temporelle dans laquelle une sortie du moyen (8) de détection de tension électrique régénérative détermine la tension électrique comme étant la tension électrique régénérative, et détecte la tension électrique induite et reconnaît la position polaire magnétique lorsqu'une condition prédéterminée est satisfaite dans une région temporelle dans laquelle la sortie du

EP 1 478 086 B1

moyen de détection de tension électrique régénérative détermine la tension électrique comme étant la tension électrique non régénérative.

EP 1 478 086 B1

*Fig. 1*

*Fig. 2*

(a)

(b)

Fig. 3

(a)

(b)

13

# Fig. 4

**(a)**

Induced voltage

Phase current

10
9
12
11
0°
180°
360°
X3  X4

Current cut

**(b)**

$V_{DC}$

Regenerative voltage

10b

$V_{DC}/2$

TON TOFF

14

18

$V_{TH2}$

$V_{ij}$

0

16

Regenerative voltage detection

12

Induced voltage zero cross point

Regenerative voltage detection

Position detection

Wait

180°

Current cut start

22

Position determination

Current cut completion

Regenerative voltage detection and position detection start

Regenerative voltage detection completion

Position detection completion

Phase commutation

X3

X4

## Fig. 5

## Fig. 6

*Fig. 7*

BLM 7

Induced voltage detecting means 1

N

U
V
W

DC/AC converting means 6

VDC 4
N

VDC

Magnetic polar position detecting means 2

voltage controlling means 3

PWM controlling means 5

16

## Fig. 8

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2642357 B
- JP 7245982 A
- JP 7337079 A